(19) **Europäisches Patentamt / European Patent Office / Office européen des brevets**

(11) **EP 4 173 916 A1**

(12) # EUROPEAN PATENT APPLICATION
published in accordance with Art. 153(4) EPC

(43) Date of publication:
**03.05.2023 Bulletin 2023/18**

(21) Application number: **21828193.9**

(22) Date of filing: **28.05.2021**

(51) International Patent Classification (IPC):
***B60W 30/165*** (2020.01)   ***B60W 30/12*** (2020.01)

(86) International application number:
**PCT/CN2021/096970**

(87) International publication number:
**WO 2021/259000 (30.12.2021 Gazette 2021/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.06.2020   CN 202010592618**

(71) Applicant: **China Faw Co., Ltd.
Changchun, Jilin 130011 (CN)**

(72) Inventors:
• **TAO, Pei
Changchun, Jilin 130011 (CN)**

• **MENG, Junfeng
Changchun, Jilin 130011 (CN)**
• **ZHOU, Shiying
Changchun, Jilin 130011 (CN)**
• **WANG, Chao
Changchun, Jilin 130011 (CN)**
• **SUN, Lianming
Changchun, Jilin 130011 (CN)**

(74) Representative: **Glawe, Delfs, Moll
Partnerschaft mbB von
Patent- und Rechtsanwälten
Postfach 13 03 91
20103 Hamburg (DE)**

(54) **METHOD AND APPARATUS FOR CONTROLLING VEHICLE FOLLOWING, VEHICLE, AND STORAGE MEDIUM**

(57)    The present invention provides a vehicle following control method, which includes that: vehicle travelling parameters and front road information of a current vehicle at a current moment are acquired (S101); a vehicle following control type is determined according to the front road information, and vehicle following parameters at the current moment under the vehicle following control type (S102) are determined; and a vehicle travelling trajectory is determined according to the vehicle travelling parameters and the vehicle following parameters, and the current vehicle is controlled to travel according to the vehicle travelling trajectory (S103). Further, a vehicle following control apparatus, a vehicle and a storage medium are provided. By means of the method, the function of performing lateral centering control on a vehicle when a lane line is not clear can be realized, thereby reducing the frequency of exiting a traffic jam assist control system, and improving the vehicle driving safety.

Vehicle travelling parameters and front road information at a current moment are acquired — S101

A vehicle following control type is determined according to the front road information, and determining vehicle following parameters at the current moment under the vehicle following control type — S102

A vehicle travelling trajectory of the current vehicle is determined according to the vehicle travelling parameters and the vehicle following parameters, and the vehicle is controlled to travel according to the vehicle travelling trajectory — S103

Fig. 1

EP 4 173 916 A1

**Description**

**Cross-Reference to Related Application**

The present invention claims the priority of Chinese Application 202010592618.7, filed in the Chinese Patent Office on June 24, 2020, and the entire contents of which are herein incorporated by reference.

**Technical Field**

The present invention relates to the technical field of autonomous driving control, and in particular to a vehicle following control method and apparatus, a vehicle and a storage medium.

**Background**

With the rapid development of electronic technology, vehicles have become an indispensable transportation means in life. A super adaptive cruise control (SACC) function is a second-level function of intelligent driving. This function can automatically control lateral centering and longitudinal vehicle following, thereby ensuring that a driver can drive without hands and feet within a certain time period.

For different speed ranges, the super adaptive cruise control is divided into a traffic jam assist (TJA) mode and a highway assist (HWA) mode. The TJA mode is mainly aimed at a lateral centering control travelling strategy when the vehicle speed is within a low speed range of (0-60km/h). A camera is configured to recognize a lane line to predict a travelling trajectory of a current vehicle. A steering angle/torque is sent to an electric power steering system (EPS) according to course angle information, so as to control the current vehicle to keep travelling in the middle of a lane.

A control mode of a traffic jam assist system provided in the related art greatly relies on a detection result of the camera on the lane line. When the lane line detected on a pavement is unclear, jumps or has a lower confidence coefficient, the traffic jam assist system will automatically exit the lateral centering control. In addition, in the case of low-speed following during traffic jam, a camera recognition obstacle is easy to occur. That is, the camera cannot recognize a complete lane line. At this time, the traffic jam assist system will exit frequently, which greatly affects the driving experience and reduces the driving safety.

**Summary**

At least some embodiments of the present invention provide a vehicle following control method and apparatus, a vehicle and a storage medium, so as at least to realize a lateral centering control function of a vehicle when a lane line is unclear, reduce the frequency of exiting a traffic jam assist control system, and improve the vehicle driving safety.

In an embodiment of the present disclosure, a vehicle following control method is provided, including:

acquiring vehicle travelling parameters and front road information of a current vehicle at a current moment;

determining a vehicle following control type according to the front road information, and determining vehicle following parameters at the current moment under the vehicle following control type; and

determining a vehicle travelling trajectory of the current vehicle according to the vehicle travelling parameters and the vehicle following parameters, and controlling the current vehicle to travel according to the vehicle travelling trajectory.

In another embodiment of the present disclosure, a vehicle following control apparatus is further provided, including:

an information acquisition module, configured to acquire vehicle travelling parameters and front road information of a current vehicle at a current moment;

a parameter determination module, configured to determine a vehicle following control type according to the front road information, and determine vehicle following parameters at the current moment under the vehicle following control type; and

a travelling trajectory determination module, configured to determine a vehicle travelling trajectory of the current vehicle according to the vehicle travelling parameters and the vehicle following parameters, and control the current vehicle to travel according to the vehicle travelling trajectory.

In another embodiment of the present disclosure, a vehicle is further provided, including:

at least one camera, configured to acquire front road information of a vehicle;

at least one radar, configured to acquire the front road information of the vehicle;

at least one controller; and

a storage apparatus, configured to store at least one programs; and

when the at least one programs are executed by the at least one controllers, the at least one controllers implement the above-mentioned vehicle following control method.

In another embodiment of the present disclosure, a storage medium containing computer-executable instructions is further provided, and when executed by a computer processor, the computer-executable instructions are used for executing the above-mentioned vehicle following control method.

## Brief Description of the Drawings

Fig. 1 is a flow diagram of a vehicle following control method according to a first embodiment of the present invention.

Fig. 2 is a flow diagram of a vehicle following control method according to a second embodiment of the present invention.

Fig. 3 is a flow diagram of determining a vehicle following control type according to a travelling state of a following vehicle according to a second embodiment of the present invention.

Fig. 4 is an example diagram of a slope change of lane-change travelling of a vehicle according to a second embodiment of the present invention.

Fig. 5a is an example diagram of vehicle following parameters, when the following vehicle is located on a right side of a current vehicle, according to a second embodiment of the present invention.

Fig. 5b is an example diagram of vehicle following parameters, when the following vehicle is located on a left side of the current vehicle, according to a second embodiment of the present invention.

Fig. 6 is an example diagram of vehicle following parameters of neighboring vehicle following according to a second embodiment of the present invention.

Fig. 7 is a schematic structural diagram of a vehicle following control apparatus according to a third embodiment of the present invention.

Fig. 8 is a schematic structural diagram of a vehicle according to a fourth embodiment of the present invention.

## Detailed Description

The present invention will be described below in combination with drawings and embodiments.

Embodiment One

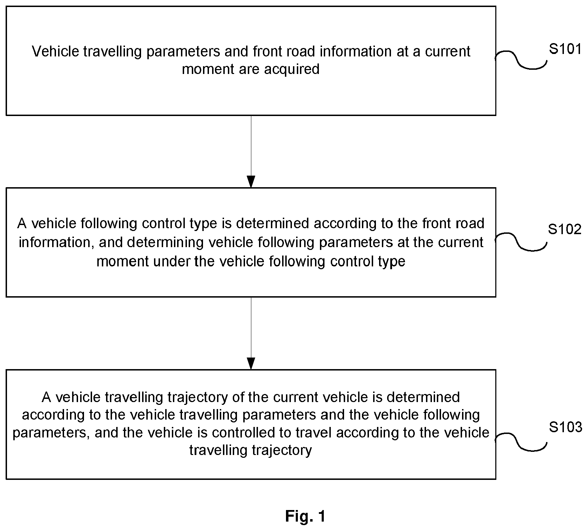

Fig. 1 is a flow diagram of a vehicle following control method according to a first embodiment of the present invention. The present embodiment can be applicable to a situation in which a traffic jam assist system of a vehicle performs lateral centering control on the vehicle when a lane line is unclear or disappears. The method can be executed by a vehicle following control apparatus. The vehicle following control apparatus can be implemented by software and/or hardware. The vehicle following control apparatus can be configured on a computing device. The method includes the following steps.

In step S101, vehicle travelling parameters and front road information at a current moment are acquired.

The vehicle travelling parameters can be understood as feature values for representing a travelling state of the vehicle at the current moment. Optionally, the vehicle travelling parameters can include an vehicle speed, a yaw velocity, a steering angle, a lateral acceleration, etc. The above-mentioned vehicle travelling parameters can be collected by a vehicle body electronic stability program (ESP) system and a steering angle sensor (SAS).

The front road information can be understood as a set of information such as vehicle travelling state information, road state information, vehicle information in neighboring lanes and the like in front of the vehicle. The front road information can be used for planning a subsequent travelling trajectory and travelling state of the vehicle. Optionally, the front road information can be detected by sensing apparatuses such as a front radar, a front-view camera, front-corner and rear-corner radars, etc.

The speed, the yaw velocity and lateral acceleration of the vehicle at the current moment are acquired by the ESP. The steering angle of the vehicle at the current moment is acquired by the SAS. The parameters mentioned above are used as the vehicle travelling parameters at the current moment. The travelling information and lane line information of a preceding vehicle that travels in front of the vehicle at the current moment are detected by the front radar and the front-view camera respectively. The travelling information of vehicles in two lanes neighboring to the lane where the vehicle travels is detected by the front-corner and rear-corner radars. The travelling information of the preceding vehicle, the lane line information, and the travelling information of the vehicles in the neighboring lanes are used as the front road information at the current moment.

In step S102, a vehicle following control type is determined according to the front road information, and determining vehicle following parameters at the current moment under the vehicle following control type.

Vehicle following can be understood as a situation in which the current vehicle follows the preceding vehicle at the same speed as the preceding vehicle, so as to ensure stable travelling in a vehicle travelling process. The vehicle following control type can be understood as a vehicle following form. The vehicle following form is determined according to the preceding vehicle that the current vehicle can follow and the travelling state of the preceding vehicle. The vehicle following control type can include a preceding vehicle following mode in which the current vehicle can follow the preceding vehicle in the same lane and a neighboring vehicle following mode in which the current vehicle follows the preceding vehicle in a lane neighboring to the current vehicle. The vehicle following parameters can be understood as parameters for representing a relative position relationship between the current vehicle and the preceding vehicle.

Whether there is the preceding vehicle in front of the current vehicle at the current moment is determined according to the front road information. When there is no preceding vehicle, the vehicle following control type is determined to be the neighboring vehicle following mode. When there is a preceding vehicle, it is necessary to determine whether the preceding vehicle is suitable for being preceding according to the travelling state of the preceding vehicle to obtain a determination result. The vehicle following control type is determined to be the preceding vehicle following mode or the neighboring vehicle following mode according to the determination result. When the vehicle following control type is determined, parameters of the relative position relationship between the current vehicle and the preceding vehicle are acquired by the radar and the front-view camera that are installed in front of the current vehicle, and the front-corner and rear-corner radars that are installed on four corners of the current vehicle. The acquired parameters are used as the vehicle following parameters at the current moment under the corresponding vehicle following control type.

In step S103, a vehicle travelling trajectory of the current vehicle is determined according to the vehicle travelling parameters and the vehicle following parameters, and the vehicle is controlled to travel according to the vehicle travelling trajectory.

The vehicle travelling trajectory can be understood as a vehicle travelling path formed by a vehicle travelling time period and positions corresponding to multiple time points.

The vehicle travelling parameters of the current vehicle at the current moment and the vehicle following parameters corresponding to the vehicle following control type are substituted into a lane line equation to determine the vehicle travelling trajectory of the current vehicle for lateral centering control within a certain time period and within a certain offset range. The current vehicle is controlled to travel according to the vehicle travelling trajectory, thereby realizing the lateral control of the vehicle, so that the current vehicle can travel along a center line of the lane without being affected by jumping or blurring of the lane line as much as possible.

Through the technical solution provided in the present embodiment, the vehicle travelling parameters and the front road information at the current moment are acquired; the vehicle following control type is determined according to the front road information, and the vehicle following parameters at the current moment under the vehicle following control type are determined; and the vehicle travelling trajectory is determined according to the vehicle travelling parameters and the vehicle following parameters, and the current vehicle is controlled to travel according to the vehicle travelling trajectory. Since the vehicle following control type is determined according to the front road information of the current vehicle at the current moment, an appropriate vehicle following object can be selected for the current vehicle, so that when the lane line disappears, the lane line is unclear, the lane line jumps or the confidence coefficient is lower, an appropriate following vehicle is selected according to the determined vehicle following control type, and the vehicle travelling trajectory is determined by means of the vehicle travelling parameters and the vehicle following parameters that are determined by the following vehicle, so that the vehicle can realize the lateral centering control within a certain offset with reference to the predicted vehicle travelling trajectory. The problem in the related art that the lateral centering of the vehicle under the control of the traffic jam assist system relies on the detection of the lane line by the camera, therefore when a complete lane line cannot be recognized, the system frequently exits, and thus it is difficult to continuously perform lateral centering control is solved. The vehicle driving safety is improved, and the driving experience is improved.

Embodiment Two

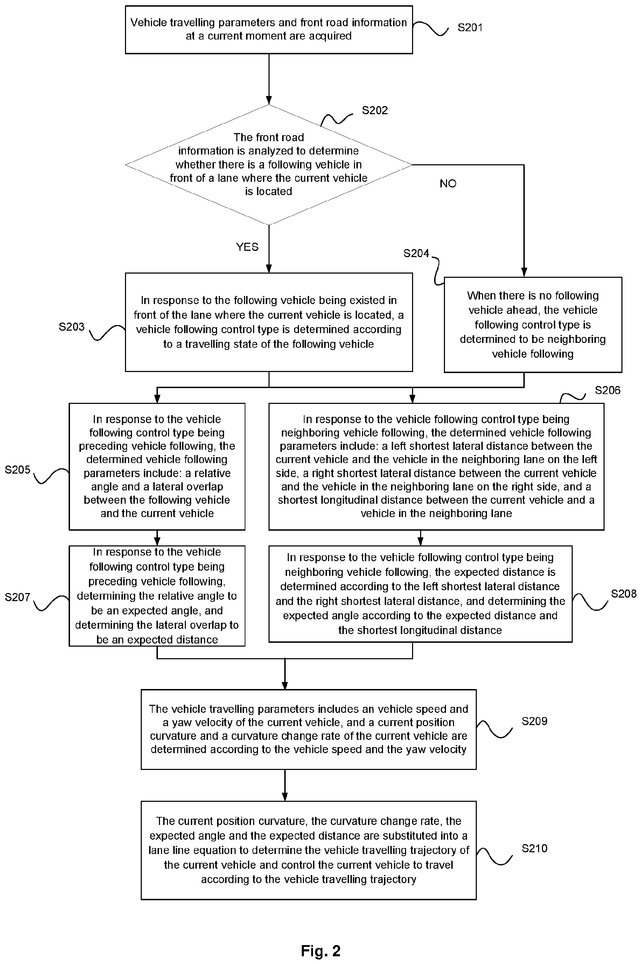

Fig. 2 is a flow diagram of a vehicle following control method according to a second embodiment of the present invention. The technical solution of the present embodiment is described on the basis of the above-mentioned technical solution. The vehicle following control method includes the following steps.

In step S201, vehicle travelling parameters and front road information at a current moment are acquired.

In step S202, the front road information is analyzed to determine whether there is a following vehicle in front of a lane where the current vehicle is located.

Environmental video information in front of a vehicle travelling direction is acquired by means of a front-view camera. Vehicle target information directly in front of the vehicle travelling direction is acquired by means of a front radar. Whether there is the following vehicle in front of a lane where the current vehicle is located is comprehensively determined according to the environmental video information and the vehicle target information. And in response to a vehicle being in front of the lane where the current vehicle is located, this vehicle is used as the following vehicle.

In step S203, in response to the following vehicle being existed in front of the lane where the current vehicle is located, a vehicle following control type is determined according to a travelling state of the following vehicle. The vehicle following control type includes neighboring vehicle following or preceding vehicle following.

The travelling state of the following vehicle can be understood as a parameter for representing a motion trajectory and a motion state of the following vehicle. A motion trend of the following vehicle can be determined according to motion parameters of the following vehicle collected within a time period. Optionally, the motion trend can include going straight, entering a curve, travelling within a curve, leaving a curve, changing lanes for travelling, etc.

Neighboring vehicle following can be understood as determining a vehicle travelling trajectory according to travelling parameters of a vehicle in a neighboring lane, a relative distance between the vehicle in the neighboring lane and the current vehicle, and other parameters, so as to realize a vehicle following mode of lateral centering control. Preceding vehicle following can be understood as determining the vehicle travelling trajectory according to the travelling parameters of a vehicle that travels in the same lane and same direction as the current vehicle and is in front of the current vehicle, the relative distance between this vehicle and the current vehicle, and other parameters, so as to realize the vehicle following mode of lateral centering control.

When the following vehicle is existed, the current vehicle needs to determine a motion trend of the current vehicle according to the travelling state of the following vehicle, and determine whether the current vehicle should follow the following vehicle according to the motion trend, so as to achieve the purpose of lateral centering control. Since it is expected to perform lateral centering control on the current vehicle, when the following vehicle has a trend to leave the current lane and change another lane for travelling, the current vehicle should release the following on the following vehicle. That is, when the current vehicle determines that the following vehicle is existed, except determining the motion trend of the following vehicle to be lane-change travelling, the current vehicle determines the vehicle following control type to be preceding vehicle following, and otherwise, determines the vehicle following control type to be neighboring following vehicle.

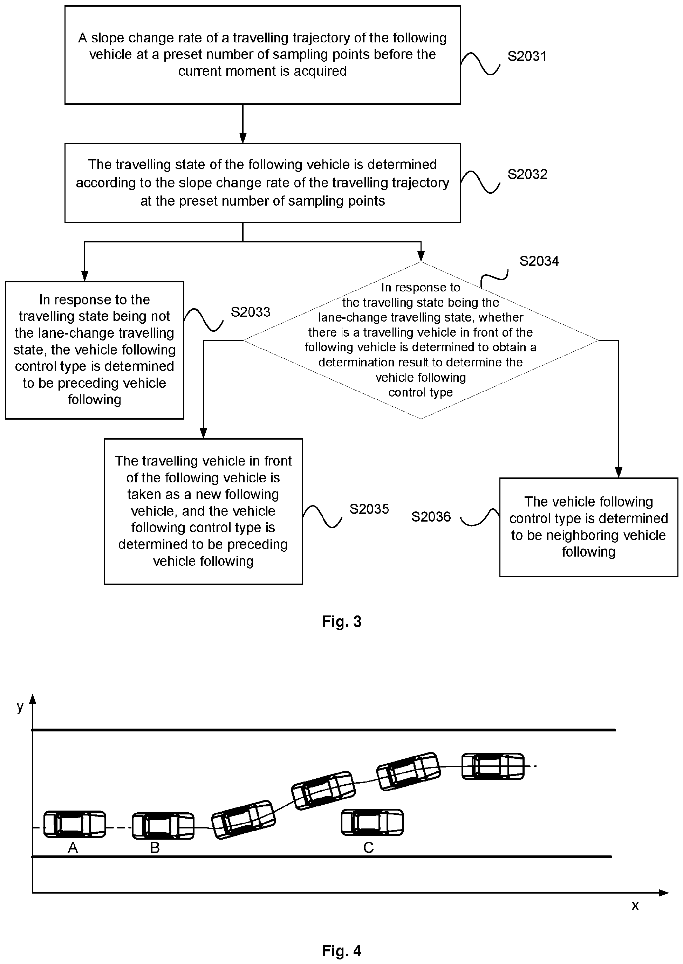

Fig. 3 is a flow diagram of determining the vehicle following control type according to the travelling state of the following vehicle according to a second embodiment of the present invention. The method further includes the following steps.

In step S2031, a slope change rate of a travelling trajectory of the following vehicle at a preset number of sampling points before the current moment is acquired.

Exemplarily, a center of the current vehicle is taken as an origin, Y is taken as a lateral distance, right is taken as a positive direction, X is taken as a longitudinal distance, and forward is taken as a positive direction, so as to construct a vehicle coordinate system, then the slope corresponding to the travelling trajectory of the following vehicle in front of the current vehicle within a very short time period can be expressed as:

$$K(i) = \frac{Y(i+1) - Y(i)}{X(i+1) - X(i)}$$

and i+1 and *i* respectively represent two corresponding sampling points within a certain step time period ∆L, *Y(i)* represents a lateral offset of the following vehicle at the sampling point *i, X(i)* represents a longitudinal offset of the following vehicle at the sampling point i, and *K(i)* represents a slope corresponding to the travelling trajectory of the following vehicle within ∆L. By setting an extremely small time period, an instant tangent slope of the travelling trajectory of the following vehicle at the sampling point i can be obtained, and then the slope change rate γ of the travelling trajectory can be expressed as:

$$\gamma(i) = \frac{K(i+1)}{K(i)}$$

Optionally, the preset number can be any positive integer value within a range from 3 to 10. A value of the preset number depends on the sampling frequency of the sampling points and the vehicle speed of the following vehicle. The preset number can be manually set by a driver, and can also be calculated according to a preset algorithm or obtained by table checking, which is not limited in the embodiments of the present invention.

In step S2032, the travelling state of the following vehicle is determined according to the slope change rate of the travelling trajectory at the preset number of sampling points.

The travelling state can be understood as the motion trend of the vehicle during the travelling process, which can include a lane-change travelling state, a curve entry travelling state, a curve travelling state, a curve exit travelling state, a straight travelling state, etc.

According to the slope corresponding to the travelling trajectory of the vehicle, whether the vehicle is travelling in a straight lane can be determined. When the current vehicle is travelling in a straight lane and the following vehicle is traveling in a curve, it is detected that the slope change rate of the travelling trajectory of the following vehicle gradually increases from small to large, the change rule of the change rate is consistent, and it can be considered that the following vehicle is in the curve entry travelling state. When both the current vehicle and the following vehicle are traveling in the curve, it is detected that the slope change rate of the travelling trajectory of the following vehicle gradually increases from large to small, the change rule of the change rate is consistent, and it can be considered that the following vehicle is in the curve exit travelling state. When both the current vehicle and the following vehicle are travelling in the straight lane, it can be considered that the following vehicle is in the straight travelling state. When it is detected that the slope change rate of the travelling trajectory of the following vehicle gradually becomes large at first, and then gradually becomes small, and it can be considered that the following vehicle is in the lane-change travelling state.

When both the current vehicle and the following vehicle are travelling in the curve, a slope difference change rate can be calculated according to the slope corresponding to the travelling trajectory of the current vehicle and the slope corresponding to the travelling trajectory of the following vehicle, so as to represent a trajectory change rule of the two vehicles in the curve at the same time, and the slope difference change rate γ' can be expressed as:

$$\gamma' = \frac{K_{ego}(i) - K_{pre}(i)}{K_{ego}(i)}$$

and $K_{ego}(i)$ can be understood as the slope corresponding to the travelling trajectory of the current vehicle at the point i, and $K_{pre}(i)$ can be understood as the slope corresponding to the travelling trajectory of the following vehicle at the point i.

When the slope difference change rate remains constant within a certain error range, it can be determined that the travelling states of the current vehicle and the following vehicle are both the curve travelling state.

In step S2033, in response to the travelling state being not the lane-change travelling state, the vehicle following control type is determined to be preceding vehicle following.

When the travelling state of the following vehicle is not the lane-change travelling state, it can be considered that the following vehicle will still travel in the same lane as the current vehicle for a time period, and the purpose of lateral centering control can be achieved by following the following vehicle. Therefore, when the travelling state of the following vehicle is not the lane-change travelling state, the vehicle following control type is determined to be preceding vehicle following.

In step S2034. in response to the travelling state being the lane-change travelling state, whether there is a travelling vehicle in front of the following vehicle is determined to obtain a determination result. The vehicle following control type is determined according to the determination result.

When the travelling state of the following vehicle is the lane-change travelling state, it can be considered that the vehicle will leave the lane where the current vehicle is travelling, and thus the current vehicle can no longer follow the following vehicle to achieve the purpose of lateral centering control. At this time, by means of the front-view camera and the front radar, whether there is a travelling vehicle in front of the following vehicle is determined, so as to determine whether the current vehicle can find a suitable following vehicle in the present lane. In response to the determination result is yes, step S2035 is executed; and in response to the determination result is no, step S2036 is executed.

In step S2035, the travelling vehicle in front of the following vehicle is taken as a new following vehicle, and the vehicle following control type is determined to be preceding vehicle following.

When it is determined that there is a travelling vehicle in front of an original following vehicle, the travelling vehicle is taken as the new following vehicle, so that the current vehicle can perform following according to a relative position parameter and the like between the new following vehicle and the current vehicle, thereby realizing lateral centering control. Accordingly, at this time, the vehicle following control type of the current vehicle is determined to be preceding vehicle following.

In step S2036, the vehicle following control type is determined to be neighboring vehicle following.

When it is determined that there is no travelling vehicle in front of the original following vehicle, it can be considered that there is no vehicle that the current vehicle can follow in front of the lane where the current vehicle is located. At this time, the vehicle following control type is determined to be neighboring vehicle following, so that the current vehicle can realize lateral centering control according to relative position parameter information of a vehicle in a neighboring lane and the current vehicle.

Exemplarily, Fig. 4 is an example diagram of a slope change of lane-change travelling of a vehicle according to a second embodiment of the present invention. A vehicle A is the current vehicle, a vehicle B is an original following vehicle of the current vehicle, and a vehicle C is a vehicle travelling in front of the original following vehicle. When the slope of the vehicle B increases at first and then decreases, it can be determined that the vehicle B is changing the lane for travelling. At this time, the vehicle A should no longer uses the preceding vehicle following mode of following the vehicle B, but should determine whether there is the vehicle C in front of the vehicle B according to a detection result. When there is the vehicle C, the vehicle C is taken as a new following vehicle, and the vehicle A continues to maintain the preceding vehicle following mode. When there is no vehicle C, the vehicle A enters the neighboring vehicle following mode of following the vehicle in the neighboring lane.

In step S204, when there is no following vehicle ahead, the vehicle following control type is determined to be neighboring vehicle following.

When there is no following vehicle, in order to realize the lateral centering control of the vehicle in the case where a clear lane line cannot be obtained, the travelling path of the current vehicle can be planned with reference to the position information of vehicles that are travelling in two neighboring lanes of the current vehicle. According to the travelling parameters of the vehicles in the neighboring lanes, relative distances with the current vehicle and other parameters, the vehicle following mode of the vehicle travelling trajectory is determined to be neighboring vehicle following. Therefore, when there is no following vehicle in front of the lane of the current vehicle, the vehicle following control type is determined to be neighboring vehicle following.

In step S205, in response to the vehicle following control type being preceding vehicle following, the determined vehicle following parameters include: a relative angle and a lateral overlap between the following vehicle and the current vehicle.

The relative angle can be understood as an angle of a connecting line between the center of the following vehicle and the center of the current vehicle relative to the center line of the current vehicle. The lateral overlap can be understood as a lateral distance between the center line of the following vehicle and the center line of the current vehicle.

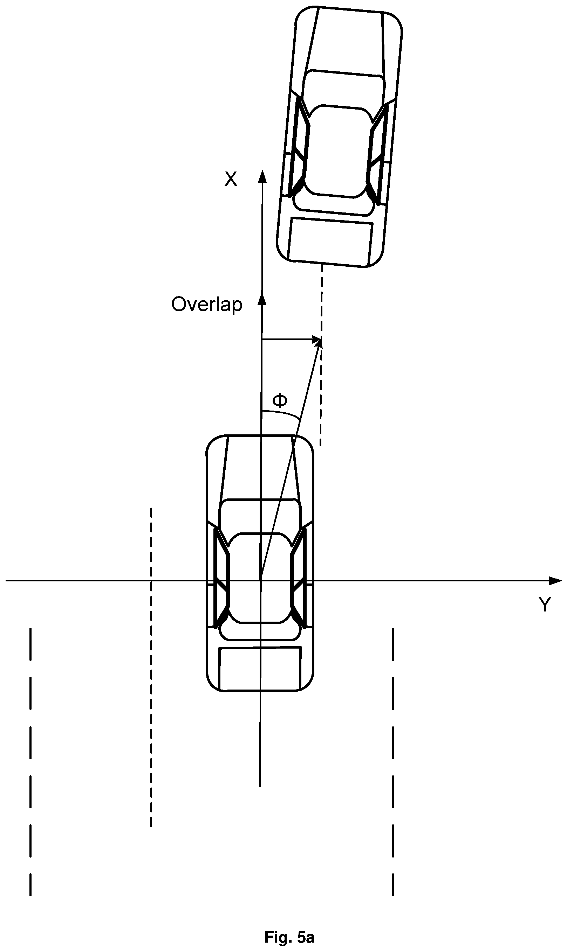

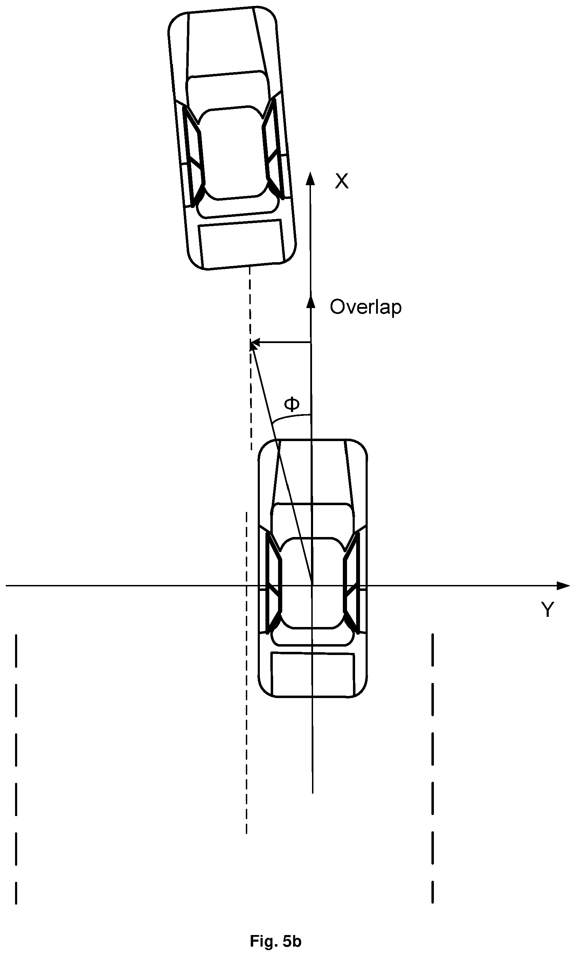

Exemplarily, Fig. 5a is an example diagram of vehicle following parameters, when the following vehicle is located on a right side of a current vehicle, according to a second embodiment of the present invention. Fig. 5b is an example diagram of vehicle following parameters, when the following vehicle is located on a left side of the current vehicle, according to a second embodiment of the present invention.

The center of the current vehicle is taken as an origin, Y is taken as a lateral distance, right is taken as a positive direction, X is taken as a longitudinal distance, and forward is taken as a positive direction, so as to construct a vehicle coordinate system, $\varphi$ represents the relative angle, and Overlap represents the lateral overlap.

In response to the duration of the lateral overlap being greater than a preset threshold value exceeding a preset time period, an operation of determining the vehicle travelling trajectory according to the vehicle travelling parameters and the vehicle following parameters is stopped to be performed, and lateral control of the vehicle is exit.

The preset threshold value is a half of a lane width detected by the current vehicle before the lane line disappears.

During the travelling process, the current vehicle collects, in real time, the lane width of the lane where the current vehicle is located by means of the front-view camera, and stores the last collected lane width before the lane line disappears. When the current vehicle is in the preceding vehicle following mode, in response to determining the lateral overlap between the following vehicle and the current vehicle being greater than a half of the lane width, it can be considered that the following vehicle has the risk of changing lanes and cutting out. At this time, the current vehicle does follow the following vehicle temporarily, and continues to acquire the lateral overlap between the following vehicle and the current vehicle, in response to the lateral overlap being greater than a half of the lane width for more than a preset time period, it can be considered that the current vehicle cannot rely on the following vehicle for lateral centering control, and exits the vehicle lateral control at this time.

In step S206, in response to the vehicle following control type being neighboring vehicle following, the determined vehicle following parameters include: a left shortest lateral distance between the current vehicle and the vehicle in the neighboring lane on the left side, a right shortest lateral distance between the current vehicle and the vehicle in the neighboring lane on the right side, and a shortest longitudinal distance between the current vehicle and a vehicle in the neighboring lane.

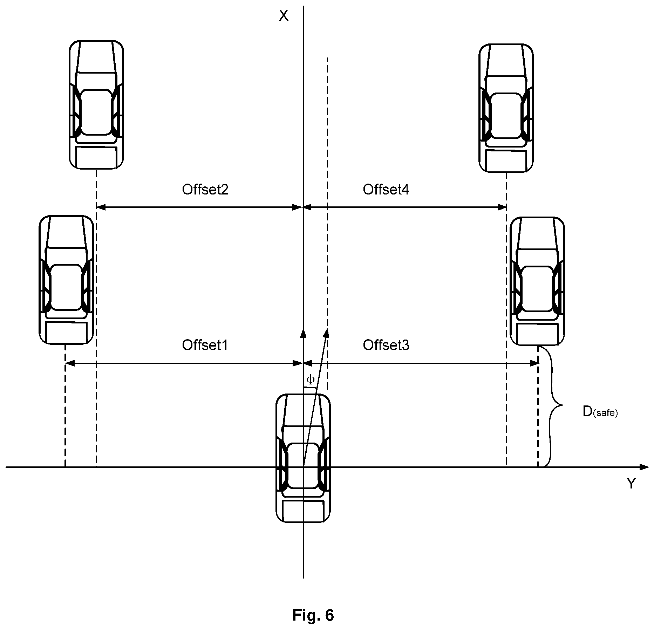

Exemplarily, Fig. 6 is an example diagram of vehicle following parameters of neighboring vehicle following provided according to a second embodiment of the present invention. It is taken as an example that there are two vehicles in the neighboring lanes on the both sides of the current vehicle. The center of the current vehicle is taken as an origin, Y is taken as a lateral distance, right is taken as a positive direction, X is taken as a longitudinal distance, and forward is taken as a positive direction, so as to construct a vehicle coordinate system. By means of the front-corner and rear-corner radars installed on the current vehicle, the lateral distances between the center lines of four vehicles in the neighboring lanes and the center line of the current vehicle, as well as the longitudinal distances between the tail centers of the four vehicles in the neighboring lanes and the center of the current vehicle are detected respectively.

As shown in Fig. 6, the lateral distance between a left preceding vehicle and the current vehicle is offset 1. The lateral distance between a vehicle in front of the left preceding vehicle and the current vehicle is offset 2. The lateral distance between a right preceding vehicle and the current vehicle is offset 3. The lateral distance between a vehicle in front of the right preceding vehicle and the current vehicle is offset 4. The shortest distance between offset 1 and offset 2 is taken as the left shortest lateral distance. As shown in Fig. 6, the left shortest lateral distance is the offset 2. The shortest distance between offset 3 and offset 4 is taken as the right shortest horizontal distance. As shown in Fig. 6, the right shortest lateral distance is the offset 4. The shortest longitudinal distance between the centers of the four vehicles and the center of the current vehicle is taken as the shortest longitudinal distance. As shown in Fig. 6, the shortest longitudinal distance is $D_{safe}$.

In step S207, in response to the vehicle following control type being preceding vehicle following, determining the relative angle to be an expected angle, and determining the lateral overlap to be an expected distance.

The expected angle can be understood as an included angle between the current center line of the current vehicle and a calculated lane center line of the lane where the current vehicle is located. The expected distance can be understood as a lateral distance between the current center line of the current vehicle and the calculated lane center line of the lane where the current vehicle is located. That is, a lateral movement expected distance of the current vehicle can reach the lane center line of the current lane.

In step S208, in response to the vehicle following control type being neighboring vehicle following, the expected distance is determined according to the left shortest lateral distance and the right shortest lateral distance, and determining the expected angle according to the expected distance and the shortest longitudinal distance.

A half of the sum of the left shortest lateral distance and the right shortest lateral distance is determined to be the expected distance. And an arc tangent of the ratio of the expected distance to the shortest longitudinal distance is determined to be the expected angle.

In step S209, the vehicle travelling parameters includes an vehicle speed and a yaw velocity of the current vehicle, and a current position curvature and a curvature change rate of the current vehicle are determined according to the vehicle speed and the yaw velocity.

The yaw velocity can be understood as a change rate of deflection of the vehicle around a vertical axis, which is used for representing the stability of the vehicle. The current position curvature can be expressed as a vehicle motion radius. The curvature change rate can be understood as the derivation of the current position curvature to the yaw velocity.

The vehicle speed can be expressed as $V_{ego}$, the yaw velocity can be expressed as $\omega_s$, then the current position curvature can be expressed as $\dfrac{\omega_s}{V_{ego}}$, and the curvature change rate can be expressed as $\dfrac{\omega'_s}{V_{ego}}$, and $\omega_s'$ represents the variation of the yaw velocity.

In step S210, the current position curvature, the curvature change rate, the expected angle and the expected distance are substituted into a lane line equation to determine the vehicle travelling trajectory of the current vehicle and control the current vehicle to travel according to the vehicle travelling trajectory.

The lane line equation can be understood as an equation used for calculating the travelling trajectory according to surrounding parameter information obtained by the vehicle. Optionally, the definition form of the lane line equation can be set to be a cubic clothoid model, which is expressed as follows:

$$Y = C_3 * X^3 + C_2 * X^2 + C1 * X + C_0$$

and the vehicle coordinate system is defined as a world coordinate system, which is constructed with the setting of the American Society of Motor Vehicle Engineers. The center of the current vehicle is taken as an origin, Y is taken as a lateral distance, right is taken as a positive direction, Xis taken as a longitudinal distance, and forward is taken as a positive direction. $C_3$ can be represented by one-sixth of the curvature change rate. $C_2$ can be represented by one-half the current position curvature. $C1$ can be represented by the expected angle. $C_0$ can be represented by the expected distance.

Exemplarily, when the vehicle following control type is preceding vehicle following, the vehicle travelling trajectory of the current vehicle can be expressed as:

$$Y = \frac{\omega'_s}{6V_{ego}} * X^3 + \frac{\omega_s}{2V_{ego}} * X^2 + \varphi * X + Overlap$$

When the vehicle following control type is neighboring vehicle following, the left shortest lateral distance and the right shortest lateral distance are expressed as *offset_{left}* and *offset_{right}* respectively, and the vehicle travelling trajectory of the current vehicle can be expressed as:

$$Y = \frac{\omega'_s}{6V_{ego}} * X^3 + \frac{\omega_s}{2V_{ego}} * X^2 + \tan^{-1}\left(\frac{offset_{left} + offset_{right}}{2D_{safe}}\right) * X + \frac{offset_{left} + offset_{right}}{2}$$

According to the vehicle travelling trajectory of the current vehicle, the current vehicle is controlled to travel according to the vehicle travelling trajectory, so as to achieve the purpose of lateral centering.

Through the technical solution provided in the present embodiment, whether there is another vehicle in front of the current vehicle is determined according to the acquired front road information. When there is the other vehicle in front of the current vehicle, the travelling state of the other vehicle is determined to determine whether the other vehicle can be followed, so as to determine the vehicle following control type. The vehicle following parameters are determined according to different vehicle following control types. The vehicle travelling trajectory of the current vehicle is determined by combining the vehicle travelling parameters of the current vehicle with the vehicle following parameters. The current vehicle travels according to the vehicle travelling trajectory. By establishing a coordinate relationship between the preceding vehicle and an environmental road, and calculating the slope and change rate of the travelling trajectory of the preceding vehicle, it is possible to more accurately determine whether the travelling state of the preceding vehicle is the curve travelling state or the lane-change travelling state, so that the current vehicle can accurately select the vehicle following control type, thereby avoiding vehicle following errors and unnecessary exit of lateral centering, improving the ability of the vehicle for continuously and accurately performing lateral centering control, and improving the vehicle driving safety.

Embodiment Three

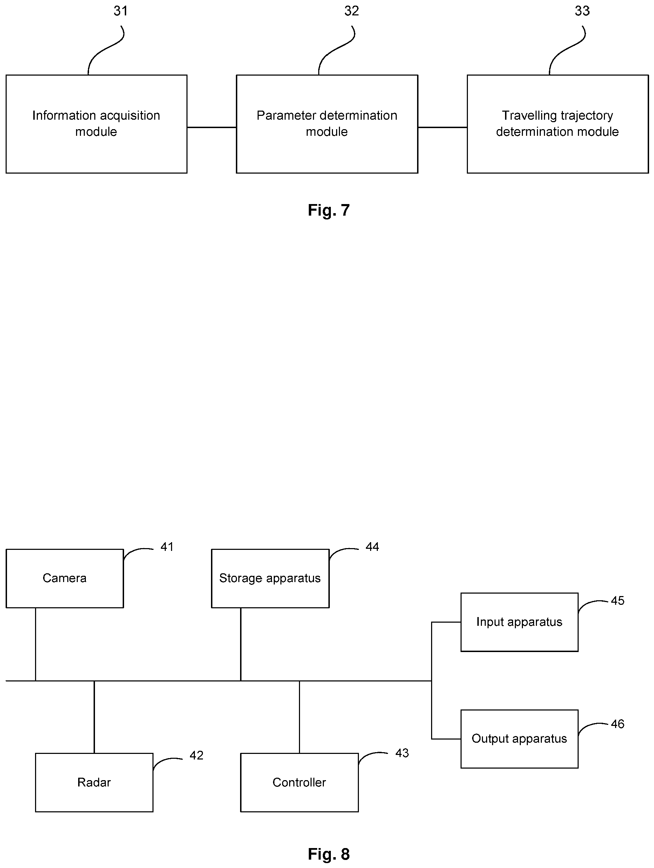

Fig. 7 is a schematic structural diagram of a vehicle following control apparatus according to a third embodiment of the present invention. The vehicle following control apparatus includes: an information acquisition module 31, a parameter determination module 32 and a travelling trajectory determination module 33.

The information acquisition module 31 is configured to acquire vehicle travelling parameters and front road information at a current moment. The parameter determination module 32 is configured to determine a vehicle following control type according to the front road information, and determine vehicle following parameters at the current moment under the vehicle following control type. And the travelling trajectory determination module 33 is configured to determine a vehicle travelling trajectory of the current vehicle according to the vehicle travelling parameters and the vehicle following parameters, and control a vehicle to travel according to the vehicle travelling trajectory.

Through the technical solution provided in the present embodiment, the problem that the lateral centering of the vehicle under the control of a traffic jam assist system relies on the detection of a lane line by a camera, when a complete lane line cannot be recognized, the system frequently exits, therefore it is difficult to continuously perform lateral centering control is solved, thereby improving the vehicle driving safety, and improving the driving experience.

Optionally, the parameter determination module 32 includes:

a vehicle following control type determination unit, configured to analyze the front road information to determine whether there is a following vehicle ahead according to the front road information; in response to the following vehicle being existed in front of the lane where the current vehicle is located, determine the vehicle following control type according to a travelling state of the following vehicle, and the vehicle following control type includes neighboring vehicle following or preceding vehicle following; and in response to the following vehicle being not existed in front of the lane where the current vehicle is located, determine the vehicle following control type to be neighboring vehicle following; and

a vehicle following parameter determination unit configured to, in response to the vehicle following control type being preceding vehicle following, the vehicle following parameters include: a relative angle and a lateral overlap between the following vehicle and the current vehicle; in response to the vehicle following control type being neighboring vehicle following, the vehicle following parameters include: a left shortest lateral distance between the current vehicle and the vehicle in the neighboring lane on the left side, a right shortest lateral distance between the current vehicle and the vehicle in the neighboring lane on the right side, and a shortest longitudinal distance between the current vehicle and a vehicle in the neighboring lane.

The vehicle following control type determination unit is configured to:

in response to the following vehicle being existed in front of the lane where the current vehicle is located, acquire a slope change rate of a travelling trajectory of the following vehicle at a preset number of sampling points before the current moment; determine the travelling state of the following vehicle according to the slope change rate of the travelling trajectory at the preset number of sampling points; in response to the travelling state being not a lane-change travelling state, determine the vehicle following control type to be preceding vehicle following; in response to the travelling state being the lane-change travelling state, determine whether there is a travelling vehicle in front of the following vehicle to obtain a determination result, and determine the vehicle following control type according to a determination result; in response to the determination result being yes, take the travelling vehicle in front of the following vehicle as a new following vehicle, and determine the vehicle following control type to be preceding vehicle following; and in response to the determination result being no, determine the vehicle following control type to be neighboring vehicle following.

Optionally, the travelling trajectory determination module 33 is configured to:

in response to the vehicle following control type being preceding vehicle following, determine the relative angle to be an expected angle, and determine the lateral overlap to be an expected distance; in response to the vehicle following control type being neighboring vehicle following, determine the expected distance according to the left shortest lateral distance and the right shortest lateral distance, and determine the expected angle according to the expected distance and the shortest longitudinal distance; determine a current position curvature and a curvature change rate of the vehicle according to an vehicle speed and a yaw velocity; and substitute the current position curvature, the curvature change rate, the expected angle and the expected distance into a lane line equation, so as to determine the vehicle travelling trajectory of the current vehicle and control the current vehicle to travel according to the vehicle travelling trajectory.

In response to duration of the lateral overlap being greater than a preset threshold value and the duration exceeding a preset time period, an operation of determining the vehicle travelling trajectory according to the vehicle travelling parameters and the vehicle following parameters is stopped to be performed, and lateral control of the vehicle is exit. The preset threshold value is a half of a lane width detected by the current vehicle before the lane line disappears.

The vehicle following control apparatus provided by the embodiment of the present invention can execute the vehicle following control method provided by any embodiment of the present invention, and has functional modules and effects corresponding to the executed method.

Embodiment Four

Fig. 8 is a schematic structural diagram of a vehicle according to a fourth embodiment of the present invention. As shown in Fig. 8, the vehicle includes a camera 41, a radar 42, a controller 43, a storage apparatus 44, an input apparatus 45 and an output apparatus 46. The number of cameras 41, radars 42 and controllers 43 in the vehicle can be at least one. One camera 41, one radar 42 and one controller 43 are taken as an example in Fig. 8. The camera 41, the radar 42, the controller 43, the storage apparatus 44, the input apparatus 45 and the output apparatus 46 in the vehicle can be connected by a bus or in other manners, and the bus connection is taken as an example in Fig. 8.

The camera 41 is configured to acquire front road information of a vehicle.

The radar 42 is configured to acquire the front road information of the vehicle.

As a computer-readable storage medium, the storage apparatus 44 can be configured to store software programs, computer-executable programs and modules, such as program instructions/modules corresponding to the vehicle following control method in the embodiments of the present invention (for example, the information acquisition module 31, the parameter determination module 32 and the travelling trajectory determination module 33). The controller 43 executes various functional applications and data processing of the vehicle by running the software programs, instructions and modules stored in the storage apparatus 44, that is, implements the above-mentioned vehicle following control method.

The storage apparatus 44 can mainly include a program storage area and a data storage area, and the program storage area can store application programs required by an operating system and at least one function. The data storage area can store data created according to the use of a terminal. In addition, the storage apparatus 44 can include a high-speed random access memory, and can also include a non-transitory memory, such as at least one magnetic disk storage device, a flash memory device, or other non-transitory solid-state storage devices. In some instances, the storage apparatus 44 can include memories that are arranged remotely relative to the controller 43, and these memories can be connected with the vehicle by a network. Instances of the network include, but are not limited to, the Internet, an intranet, a local area network, a mobile communication network, and combinations thereof.

The input apparatus 45 can be configured to receive input numerical or character information and generate a key signal input that is related to user settings and function control of the vehicle. The output apparatus 46 can include display devices such as a display screen.

Embodiment Five

The Embodiment Five of the present invention further provides a storage medium containing computer-executable instructions. When executed by a computer processor, the computer-executable instructions are used for executing a vehicle following control method, and the vehicle following control method includes the following steps:

    acquiring vehicle travelling parameters and front road information of a current vehicle at a current moment;

    determining a vehicle following control type according to the front road information, and determining vehicle following parameters at the current moment under the vehicle following control type; and

    determining a vehicle travelling trajectory of the current vehicle according to the vehicle travelling parameters and the vehicle following parameters, and controlling the current vehicle to travel according to the vehicle travelling trajectory.

According to the storage medium containing the computer-executable instructions provided by the embodiment of the present invention, the computer-executable instructions are not limited to the method operations as described above, but can also execute related operations in the vehicle following control method provided by any embodiment of the present invention.

By means of the above descriptions of the embodiments, the present invention can be implemented by software plus necessary universal hardware, and can also be implemented by hardware. The technical solutions in the present invention can be embodied in the form of a software product, the computer software product can be stored in a computer-readable storage medium, such as a floppy disk of a computer, a read-only memory (Read-Only Memory, ROM), a random access memory (Random Access Memory, RAM), a flash (FLASH), a magnetic disk, an optical disk or the like, and include multiple instructions for enabling a computer device (can be a personal computer, a server, or a network device and the like) to execute the method in the embodiments of the present invention.

In the embodiments of the above-mentioned search apparatus, multiple units and modules included therein are divided according to functional logic, but are not limited to the above-mentioned division, as long as corresponding functions can be implemented; and in addition, the name of each functional unit is for the convenience of distinguishing from each other, but is not used for limiting the protection scope of the present invention.

Claims

1.  A vehicle following control method, comprising:

        acquiring vehicle travelling parameters and front road information of a current vehicle at a current moment;
        determining a vehicle following control type according to the front road information, and determining vehicle following parameters at the current moment under the vehicle following control type; and
        determining a vehicle travelling trajectory of the current vehicle according to the vehicle travelling parameters and the vehicle following parameters, and controlling the current vehicle to travel according to the vehicle travelling trajectory.

2.  The method as claimed in claim 1, wherein determining the vehicle following control type according to the front road information comprises:

        analyzing the front road information to determine whether there is a following vehicle in front of a lane where the current vehicle is located;
        in response to the following vehicle being existed in front of the lane where the current vehicle is located, determining the vehicle following control type according to a travelling state of the following vehicle, wherein the vehicle following control type comprises neighboring vehicle following or preceding vehicle following; and in response to the following vehicle being not existed in front of the lane where the current vehicle is located, determining the vehicle following control type to be neighboring vehicle following.

3. The method as claimed in claim 2, wherein in response to the following vehicle being existed in front of the lane where the current vehicle is located, determining the vehicle following control type according to the travelling state of the following vehicle comprises:

acquiring a slope change rate of a travelling trajectory of the following vehicle at a preset number of sampling points before the current moment;
determining the travelling state of the following vehicle according to the slope change rate of the travelling trajectory at the preset number of sampling points;
in response to the travelling state being not a lane-change travelling state, determining the vehicle following control type to be preceding vehicle following; and
in response to the travelling state being the lane-change travelling state, determining whether there is a travelling vehicle in front of the following vehicle to obtain a determination result, and determining the vehicle following control type according to the determination result.

4. The method as claimed in claim 3, wherein determining the vehicle following control type according to the determination result comprises:

in response to the travelling vehicle being existed in front of the following vehicle, taking the travelling vehicle in front of the following vehicle as a new following vehicle, and determining the vehicle following control type to be preceding vehicle following; and
in response to the travelling vehicle being not existed in front of the following vehicle, determining the vehicle following control type to be neighboring vehicle following.

5. The method as claimed in claim 4, wherein determining the vehicle following parameters at the current moment under the vehicle following control type comprises:

in response to the vehicle following control type being preceding vehicle following, the vehicle following parameters comprise: a relative angle and a lateral overlap between the following vehicle and the current vehicle; and
in response to the vehicle following control type being neighboring vehicle following, the vehicle following parameters comprise: a left shortest lateral distance between the current vehicle and a vehicle in a neighboring lane on the left side, a right shortest lateral distance between the current vehicle and a vehicle in the neighboring lane on the right side, and a shortest longitudinal distance between the current vehicle and a vehicle in the neighboring lane.

6. The method as claimed in claim 5, wherein the vehicle travelling parameters comprise a vehicle speed and a yaw velocity of the current vehicle;
determining the vehicle travelling trajectory according to the vehicle travelling parameters and the vehicle following parameters, and controlling the current vehicle to travel according to the vehicle travelling trajectory comprises:

in response to the vehicle following control type being preceding vehicle following, determining the relative angle to be an expected angle, and determining the lateral overlap to be an expected distance; in response to the vehicle following control type being neighboring vehicle following, determining the expected distance according to the left shortest lateral distance and the right shortest lateral distance, and determining the expected angle according to the expected distance and the shortest longitudinal distance;
determining a current position curvature and a curvature change rate of the current vehicle according to the vehicle speed and the yaw velocity; and
substituting the current position curvature, the curvature change rate, the expected angle and the expected distance into a lane line equation to determine the vehicle travelling trajectory of the current vehicle and control the current vehicle to travel according to the vehicle travelling trajectory.

7. The method as claimed in claim 5, further comprising:

in response to a duration of the lateral overlap being greater than a preset threshold value exceeding a preset time period, stopping performing an operation of determining the vehicle travelling trajectory according to the vehicle travelling parameters and the vehicle following parameters, and exiting lateral control of the vehicle; wherein the preset threshold value is a half of a lane width detected by the current vehicle before the lane line disappears.

8. A vehicle following control apparatus, comprising:

   an information acquisition module, configured to acquire vehicle travelling parameters and front road information of a current vehicle at a current moment;
   a parameter determination module, configured to determine a vehicle following control type according to the front road information, and determine vehicle following parameters at the current moment under the vehicle following control type; and
   a travelling trajectory determination module, configured to determine a vehicle travelling trajectory of the current vehicle according to the vehicle travelling parameters and the vehicle following parameters, and control the current vehicle to travel according to the vehicle travelling trajectory.

9. A vehicle, comprising:

   at least one camera, configured to acquire front road information of a vehicle;
   at least one radar, configured to acquire the front road information of the vehicle;
   at least one controller; and
   a storage apparatus, configured to store at least one program; and
   when the at least one program is executed by the at least one controller, the at least one controller implements the vehicle following control method as claimed in any of claims 1-7.

10. A storage medium containing computer-executable instructions, wherein when executed by a computer processor, the computer-executable instructions are used for executing the vehicle following control method as claimed in any of claims 1-7.

Vehicle travelling parameters and front road information at a current moment are acquired — S101

A vehicle following control type is determined according to the front road information, and determining vehicle following parameters at the current moment under the vehicle following control type — S102

A vehicle travelling trajectory of the current vehicle is determined according to the vehicle travelling parameters and the vehicle following parameters, and the vehicle is controlled to travel according to the vehicle travelling trajectory — S103

**Fig. 1**

```
                  ┌─────────────────────────────────────────┐
                  │ Vehicle travelling parameters and front  │     S201
                  │   road information at a current moment    ├─⁓─
                  │            are acquired                   │
                  └────────────────────┬────────────────────┘
                                       │
                                       ▼
                              ╱────────────────╲
                            ╱     The front road   ╲         S202
                          ╱  information is analyzed to ╲   ─⁓─
                         ╱  determine whether there is a   ╲
                         ╲  following vehicle in front of a ╱ ──────── NO ────────┐
                          ╲ lane where the current vehicle ╱                      │
                            ╲        is located          ╱                        │
                              ╲────────────────────────╱                          │
                                       │ YES                                      │
                                                                                  │
                                                    S204 ⁓                         │
                                       ▼                                          ▼
 S203    ┌──────────────────────────────────────┐   ┌──────────────────────────────┐
  ⁓      │ In response to the following vehicle  │   │ When there is no following   │
         │ being existed in front of the lane    │   │ vehicle ahead, the vehicle   │
         │ where the current vehicle is located, │   │ following control type is    │
         │ a vehicle following control type is   │   │ determined to be neighboring │
         │ determined according to a travelling  │   │ vehicle following            │
         │ state of the following vehicle        │   └──────────────────────────────┘
         └───────────────────┬───────────────────┘
```

| S205 ⁓ | In response to the vehicle following control type being preceding vehicle following, the determined vehicle following parameters include: a relative angle and a lateral overlap between the following vehicle and the current vehicle |
|---|---|

S206 ⁓
In response to the vehicle following control type being neighboring vehicle following, the determined vehicle following parameters include: a left shortest lateral distance between the current vehicle and the vehicle in the neighboring lane on the left side, a right shortest lateral distance between the current vehicle and the vehicle in the neighboring lane on the right side, and a shortest longitudinal distance between the current vehicle and a vehicle in the neighboring lane

| S207 ⁓ | In response to the vehicle following control type being preceding vehicle following, determining the relative angle to be an expected angle, and determining the lateral overlap to be an expected distance |
|---|---|

In response to the vehicle following control type being neighboring vehicle following, the expected distance is determined according to the left shortest lateral distance and the right shortest lateral distance, and determining the expected angle according to the expected distance and the shortest longitudinal distance    S208 ⁓

┌──────────────────────────────────────────────────────────┐
│ The vehicle travelling parameters includes an vehicle     │   S209
│ speed and a yaw velocity of the current vehicle, and a    │  ⁓
│ current position curvature and a curvature change rate of │
│ the current vehicle are determined according to the       │
│ vehicle speed and the yaw velocity                        │
└───────────────────────────┬──────────────────────────────┘
                            ▼
┌──────────────────────────────────────────────────────────┐
│ The current position curvature, the curvature change rate,│
│ the expected angle and the expected distance are          │   S210
│ substituted into a lane line equation to determine the    │  ⁓
│ vehicle travelling trajectory of the current vehicle and  │
│ control the current vehicle to travel according to the    │
│ vehicle travelling trajectory                             │
└──────────────────────────────────────────────────────────┘

**Fig. 2**

A slope change rate of a travelling trajectory of the following vehicle at a preset number of sampling points before the current moment is acquired — S2031

The travelling state of the following vehicle is determined according to the slope change rate of the travelling trajectory at the preset number of sampling points — S2032

S2034

In response to the travelling state being not the lane-change travelling state, the vehicle following control type is determined to be preceding vehicle following — S2033

In response to the travelling state being the lane-change travelling state, whether there is a travelling vehicle in front of the following vehicle is determined to obtain a determination result to determine the vehicle following control type

The travelling vehicle in front of the following vehicle is taken as a new following vehicle, and the vehicle following control type is determined to be preceding vehicle following — S2035

S2036 — The vehicle following control type is determined to be neighboring vehicle following

**Fig. 3**

**Fig. 4**

**Fig. 5a**

**Fig. 5b**

**Fig. 6**

31                           32                           33

| Information acquisition module | Parameter determination module | Travelling trajectory determination module |

**Fig. 7**

| Camera | 41 | | Storage apparatus | 44 |

| Input apparatus | 45 |

| Radar | 42 | | Controller | 43 |

| Output apparatus | 46 |

**Fig. 8**

## INTERNATIONAL SEARCH REPORT

| International application No. |
|---|
| **PCT/CN2021/096970** |

| **A.** | **CLASSIFICATION OF SUBJECT MATTER** |
|---|---|
| | B60W 30/165(2020.01)i; B60W 30/12(2020.01)i |

According to International Patent Classification (IPC) or to both national classification and IPC

| **B.** | **FIELDS SEARCHED** |
|---|---|

Minimum documentation searched (classification system followed by classification symbols)

B60W; G01C; G08G

Documentation searched other than minimum documentation to the extent that such documents are included in the fields searched

Electronic data base consulted during the international search (name of data base and, where practicable, search terms used)

CNABS; VEN; CNKI: 车, 跟车, 跟随, 参数, 距离, 角度, 轨迹, 路径, 车道, vehicle, following, heel, parameter, distance, angle, track, path, route, lane

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| PX | CN 111731289 A (CHINA FAW GROUP CORPORATION) 02 October 2020 (2020-10-02) claims 1-10 | 1-10 |
| X | CN 109789875 A (NISSAN MOTOR CO., LTD.) 21 May 2019 (2019-05-21) description, paragraphs 0035-0081, and figures 1-9 | 1-5, 7-10 |
| A | CN 108909709 A (CHERY AUTOMOBILE CO., LTD.) 30 November 2018 (2018-11-30) entire document | 1-10 |
| A | CN 105109488 A (CHERY AUTOMOBILE CO., LTD.) 02 December 2015 (2015-12-02) entire document | 1-10 |
| A | CN 109572695 A (HUNAN AUTOMOTIVE ENGINEERING VOCATIONAL COLLEGE) 05 April 2019 (2019-04-05) entire document | 1-10 |
| A | JP 02291100 A (MAZDA MOTOR CORPORATION) 30 November 1990 (1990-11-30) entire document | 1-10 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 August 2021** | **03 September 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/096970**

| Patent document cited in search report | | | Publication date (day/month/year) | Patent family member(s) | | | Publication date (day/month/year) |
|---|---|---|---|---|---|---|---|
| CN | 111731289 | A | 02 October 2020 | None | | | |
| CN | 109789875 | A | 21 May 2019 | US | 2019227560 | A1 | 25 July 2019 |
| | | | | EP | 3517381 | A1 | 31 July 2019 |
| | | | | JP | WO2018055773 | A1 | 18 April 2019 |
| | | | | RU | 2719117 | C1 | 17 April 2020 |
| | | | | BR | 112019005696 | A2 | 09 July 2019 |
| | | | | KR | 20190055192 | A | 22 May 2019 |
| | | | | WO | 2018055773 | A1 | 29 March 2018 |
| | | | | EP | 3517381 | B1 | 15 July 2020 |
| | | | | JP | 6822480 | B2 | 27 January 2021 |
| | | | | CA | 3038476 | A1 | 29 March 2018 |
| | | | | MX | 2019003386 | A | 06 June 2019 |
| CN | 108909709 | A | 30 November 2018 | None | | | |
| CN | 105109488 | A | 02 December 2015 | None | | | |
| CN | 109572695 | A | 05 April 2019 | None | | | |
| JP | 02291100 | A | 30 November 1990 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010592618